# EUROPÄISCHE PATENTSCHRIFT

(11) **EP 0 610 230 B1**
(45) Veröffentlichungstag und Bekanntmachung des Hinweises auf die Patenterteilung: **20.08.1997**
(21) Anmeldenummer: 92919630.1
(22) Anmeldetag: 17.09.1992
(51) Int. Cl.: B09B 3/00, B01D 11/02

(54) **BODENWASCHANLAGE**
SOIL-WASHING PLANT
INSTALLATION POUR LE LAVAGE DU SOL

(30) Priorität: 17.09.1991 DE 9111579 U; 31.08.1992 DE 4228966
(43) Veröffentlichungstag der Anmeldung: 17.08.1994
(73) Patentinhaber: Teufert, Friedrich, 81667 München (DE); Schandel, Rudolf, 81371 München (DE)
(72) Erfinder: Teufert, Friedrich, 81667 München (DE)
(74) Vertreter: Säger, Manfred, Dipl.-Ing.
(86) Internationale Anmeldenummer: EP9202149
(87) Internationale Veröffentlichungsnummer: WO9305895

(56) Entgegenhaltungen:
- WO-A-88/02285
- DE-A- 2 531 732
- DE-A- 3 724 779
- DE-A- 3 839 544
- DE-A- 3 902 535
- US-A- 4 336 136
- AUFBEREITUNGS TECHNIK. Bd. 31, Nr. 12, Dezember 1990, WIESBADEN DE Seiten 656 - 662 GROHS: 'Die Aufbereitungstechnik des Bodenwaschens' s
- WASSER, LUFT UND BODEN. Bd. 33, Nr. 7/8, Juli/Aug. 1989, Mainz DE Seiten 62-63 D PPERT: 'Zweistufiges nassmechanisches Verfahren zur Bodensanierung' s

## Beschreibung

Die vorliegende Erfindung betrifft ein Verfahren und eine Vorrichtung zum Dekontaminieren fester Stoffe, insbesondere von Erdreich, gemäß dem Oberbegriff des Verfahrens- bzw. Vorrichtungshauptanspruch.

Zum Dekontaminieren von festen Stoffen, wie beispielsweise Erdreich, Boden, Baumaterialien und dergleichen werden zwei prinzipiell unterschiedliche Verfahrensweisen verwendet. Entweder wird kontaminierter Boden auf speziellen Deponien abgelagert, wobei eine weitere Reinigung nicht erfolgt, oder der Boden wird vor Ort oder in einer zentralen Anlage dekontaminiert. Dabei werden Extraktionsverfahren mit Säuren und Laugen, mikrobiologische Verfahren, thermische Verfahren oder eine Bodenwäsche durch Wasser mit Zusätzen verwendet. Von diesen Verfahren eignen sich die Waschverfahren zum Entfernen von Metallen, anorganischen Verbindungen, polycyclischen aromatischen Kohlenwasserstoffen (PAKs) oder Mineralölen. Der wichtigste Effekt bei diesen Waschverfahren ist die Ablösung der Schadstoffe von den Bodenpartikeln, wobei durch Energieeintrag durch Scherkräfte eine Ablösung von der Schadstoffoberfläche gelingt. Dieser Effekt kann durch Tenside unterstützt werden. Beim Kostenvergleich liegen die Bodenwaschverfahren gegenüber den übrigen Verfahren nicht günstig, was unter anderem durch den hohen Energieaufwand für die Einbringung der nötigen Scherkräfte bedingt ist. Lediglich bei den thermischen Verfahren, bei denen durch Verbrennungsvorgänge der Boden biologisch abgetötet wird, ist der Energieaufwand und damit die Kosten noch höher.

Ein System zur Behandlung von Böden, die mit Rohölen oder anderen raffinierten Petroleumprodukten kontaminiert sind, ist bekannt (US-A-4 336 136). Dabei wird das zu dekontaminierende Material zunächst in die Form eines Schlammes überführt. Es wird also eine möglichst feinteilige Aufarbeitung des kontaminierten Materials für erforderlich gehalten.

Aufgabe der vorliegenden Erfindung ist es, ein Verfahren und eine Vorrichtung zum Dekontaminieren fester Stoffe zu schaffen, daß sich durch eine hohe Wirksamkeit bei schneller Durchführungsmöglichkeit und damit einfacher Wirkungsweise und niedrigen Kosten auszeichnet.

Gelöst wird diese Aufgabe durch ein Verfahren bzw. eine Vorrichtung gemäß dem Kennzeichen des Verfahrens bzw. Vorrichtungshauptanspruchs.

Das erfindungsgemäße Waschverfahren eignet sich zum Auswaschen sämtlicher Kontaminationen, insbesondere von Metallen, anorganischen Verbindungen, polycyclischen aromatischen Kohlenwasserstoffen und Mineralölen. Dabei werden die Schadstoffe in die Waschflüssigkeit übertragen, was durch Anwendung mechanischer Energie durch Einbringung von Scherkräften mit Unterstützung von chemischen Hilfsmitteln, wie Tensiden und durch Einführung von Wärmeenergie geschieht. Dabei werden die Schadstoffe von den Feststoff-Fraktionen getrennt und, sofern sie löslich sind, gelöst oder in die Flüssigphase überführt.

Die kontaminierten Stoffe werden vor dem erfindungsgemäßen Waschverfahren nicht gebrochen oder gemahlen, da hierdurch nur der Feinkornanteil vergrößert würde, was die Rekontamination fördern würde.

Der Anteil an Feinteilen, beispielsweise unterhalb einer Korngröße von 0,1 mm, der im erfindungsgemäßen Verfahren als Schlamm anfällt, soll demnach möglichst nicht vergrößert werden. Aus diesem Grunde wird das kontaminierte Material vor Beginn des Waschverfahrens nicht zerkleinert, sondern lediglich vorgesiebt, wobei lediglich grobkörnige Anteile, beispielsweise mit einer Korngröße von mehr als 10 cm, im Sieb zurückgehalten werden. Es ist auch möglich, mehrfach vorzusieben, beispielsweise auf Korngrößen von 0 - 2 cm, 2 - 10 cm und mehr als 10 cm und die einzelnen Fraktionen getrennten Dekontaminierungsverfahren zu unterwerfen.

Nach dem Vorsieben werden die vorgesiebten Teilchen in einem Mischer mit Warmwasser, Sattdampf und Tensiden behandelt. In diesem Mischer erfolgt demnach der erforderliche Energieeintrag in Form von mechanischer Energie, wobei durch die Mischapparatur Scherkräfte auf das Reinigungsgut übertragen werden, sowie in Form von Wärmeenergie, die durch Warmwasser und Sattdampf eingegeben wird. Die zugegebenen Tenside, bzw. Waschadditive und die eingetragene Wärme reduzieren die Bindekräfte der Schadstoffe an die kontaminierten festen Stoffe, wodurch das Ablösen der Verunreinigungen erleichtert wird.

Zum Einbringen der erforderlichen mechanischen Energie, insbesondere in Form von Scherkräften, sind starke Antriebsleistungen erforderlich, wobei durch die erforderliche Kühlung der Antriebsaggregate erhebliche Wärmemengen anfallen. Diese Wärmemengen werden erfindungsgemäß in das Verfahren bzw. in die Vorrichtung zurückgeführt und zur Erzeugung von Warmwasser und Sattdampf verwendet. Dadurch ist eine bessere Ausnutzung der Eigenenergieerzeugung, die zum Betrieb der Waschanlage notwendig ist, gegeben.

Die erste Reinigungsstufe, die Eintragung mechanischer und thermischer Energie in die kontaminierten Stoffe, wird diskontinuierlich in einem Mischer durchgeführt. Dabei kann durch einen kurzen Vorversuch ermittelt werden, welche Größen an mechanischer und thermischer Energie für eine Ablösung der Schadstoffe erforderlich sind. In einem üblichen Gegenstrommischer mit gegenläufigen Spiralen und einem Düsensystem, wie es beispielsweise in der Betonmischtechnik verwendet wird, mit einem Fassungsvermögen von etwa 12 m³ lassen sich bei durchschnittlich kontaminierten Feststoffen Mengendurchsätze von ca. 10 m³ pro Stunde erzielen. Dabei beträgt der Durchsatz an Warmwasser ca. 1 bis 2 m³ im Mischer. Dabei kann die Temperatur des Warmwassers zwischen 40 und 80° C liegen, die Temperatur des Sattdampfes zwischen 150 und 250° C. Bei großen Durchsatzmengen können in der ersten Reinigungsstufe auch mehrere Mischer eingesetzt werden.

Nach der ersten Reinigungsstufe, die gemäß den obigen Ausführungen diskontinuierlich im Mischer erfolgt, wird das zu reinigende Gut in einen Pufferbehälter überführt, von dem aus es dann in die nachfolgenden kontinuierlichen Reinigungsstufen überführt wird. Der Pufferbehälter muß von der Größe her so ausgelegt sein, daß er die aus den diskontinuierlichen Waschverfahren stammende Menge fester Stoffe aus dem bzw. den Mischern aufnehmen kann, um sie in die nachfolgende kontinuierliche Reinigung weiterzuleiten. Zu diesem Zweck ist der Pufferbehälter mit einer Fördereinrichtung, beispielsweise einem üblichen Kratzkettenförderer ausgerüstet, der das aus der ersten Reinigungsstufe stammende Reinigungsgut in die zweite Reinigungsstufe überführt.

Die zweite Reinigungsstufe wird in einer Waschtrommel kontinuierlich unter Zugabe von zusätzlichem Wasser, vorzugsweise Warmwasser durchgeführt, wobei die kontaminierenden Stoffe in die Wasserphase überführt werden und die Feststoffe abgeschieden werden. Die Waschtrommel arbeitet vorzugsweise nach dem Gegenstromprinzip, die Trennwirkung beruht auf dem Absetzen der schweren Bestandteile durch Schwerkraft. Die abgesetzten schweren Teile werden im Gegenstrom ausgetragen, beispielsweise mit einer Förderspirale und Schöpfbechern. Das Spülmedium, bespielsweise warmes Spülwasser, durchströmt die Trommel in entgegengesetzter Richtung und trägt die feinen Bestandteile auf der Einfüllseite auf. Von hier aus kann das Schlammwasser direkt in einen zentralen Pumpensumpf gelangen, von wo aus das Wasser einer Wasseraufbereitung zugeführt wird.

Die Durchsatzmenge der Trommel der zweiten Reinigungsstufe muß auf die Durchsatzmenge der ersten Reinigungsstufe abgestimmt sein. Das bedeutet, daß die Waschtrommel so dimensioniert sein muß, daß sie das in der ersten Reinigungsstufe anfallende Gut, das in dem Pufferbehälter zwischengelagert wird, verarbeitet, bis aus der ersten Reinigungsstufe diskontinuierlich erneut Material anfällt. Auch hier sind die nötigen Arbeitsbedingungen, beispielsweise Wassertemperatur, Wassermenge, Durchsatzmenge usw. leicht durch einen orientierenden Vorversuch zu ermitteln.

Der Waschtrommel kann eine Entwässerungsschnecke nachgeschaltet sein, die wie in der Waschtrommel kontinuierlich arbeitet und in der gegebenenfalls durch Zugabe weiteren Spülwassers der Reinigungseffekt der zweiten Stufe verstärkt wird. Bei nur schwach kontaminierten Böden kann der Einsatz einer Entwässerungsschnecke im allgemeinen entfallen.

Das im gesamten Verfahren bzw. in der Vorrichtung anfallende Schmutz- bzw. Waschwasser kann in einem zentralen Pumpensumpf gesammelt werden um von hier einem Kläreindicker zugeführt zu werden. Der aus dem Kläreindicker eingezogene Schlamm kann einem Vakuumbandfilter zur Nachentwässerung zugeführt und bei Temperaturen von 200 - 400°C, bevorzugt von 250 bis 350°C getrocknet werden. Insbesondere bei starker Kontamination, beispielsweise durch Schwermetalle, kann das Abwasser sämtlicher Verfahrensstufen noch durch eine zusätzliche Umkehrosmose gereinigt werden. Die Abluft aus der Schlammtrocknung kann über einen Biofilter geleitet werden, so daß die gesamte Anlage abwasser- und abluftfrei ist.

Die Energieerzeugung für die erfindungsgemäße Vorrichtung bzw. das Verfahren erfolgt vorzugsweise mit Pflanzenöl bzw. Rapsölmotoren. Pflanzenölmotoren setzen nicht mehr Kohlendioxyd frei, als die Ölpflanze zuvor der Luft für ihr Wachstum entzogen hat, so daß der Kohlendioxydkreislauf geschlossen bleibt. Die Leistung des Antriebs ist so dimensioniert, daß der gesamte mechanische Teil, Aufgabe und Dosierbehälter, Mischer, Förderer, Waschtrommel, Entwässerungsaggregate, Pumpen und dergleichen, angetrieben werden können. Die Wärmeverlustleistung der Aggregate kann über Wärmetauscher die Dampferzeugung bzw. Heizung der Anlage nutzbar gemacht werden. Das gleiche gilt für die bei dem Betrieb aller Nebenaggregate anfallenden Energiemengen.

Die gesamte Vorrichtung kann in Containern untergebracht werden, dadurch ergibt sich ein minimaler Platzbedarf und es wird eine schnelle Einsatzbereitschaft am Schadensort gewährleistet.

Das Dekontaminierungsverfahren bzw. die zur Durchführung des Verfahrens dienende Vorrichtung wird nachfolgend anhand der Figuren beispielhaft näher beschrieben:

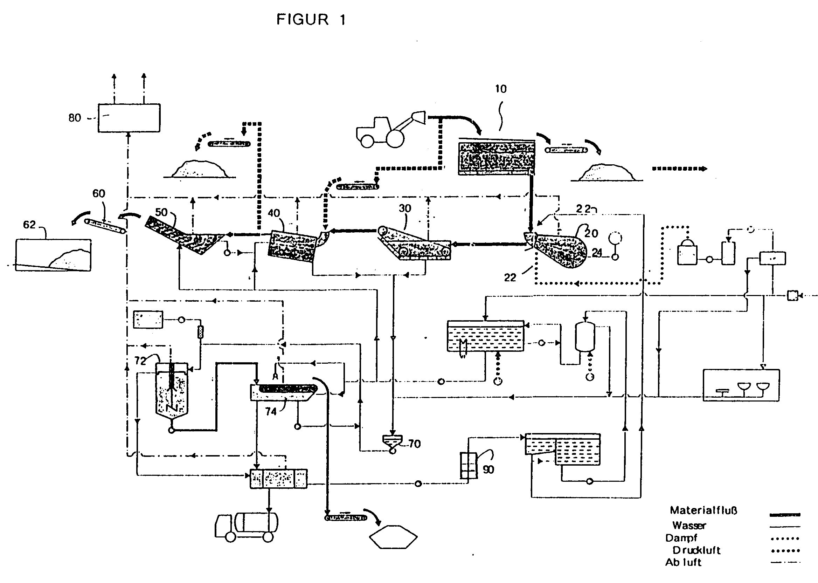

- Figur 1: zeigt ein Fließdiagramm des Verfahrens mit den einzelnen Vorrichtungsbestandteilen
- Figur 2: zeigt einen als Mischtrommel verwendbaren Gegenstrommischer

Die kontaminierten festen Stoffe werden in eine Beschickungsvorrichtung 10 überführt, wo die groben Teile, beispielsweise mit einer Korngröße von mehr als 10 cm, durch ein Sieb zurückgehalten werden. Diese groben Teile müssen im allgemeinen nur einem Kurzdurchlauf zugeführt werden, was wegen der geringen spezifischen Oberfläche des groben Materials im allgemeinen ausreicht.

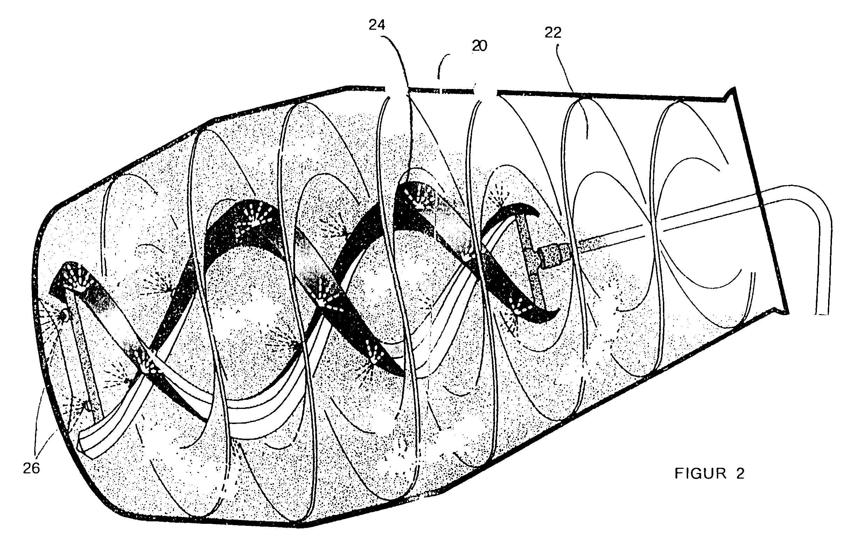

Aus der Beschickungsvorrichtung wird das kontaminierte Gut in eine erste Reinigungsstufe überführt, in der es in einer Mischvorrichtung 20 mit Wasser, vorzugsweise Warmwasser, Sattdampf und Tensiden behandelt wird. Dabei werden Wasser und Sattdampf über Zuführvorrichtungen 22, beispielsweise in Form von Düsen, in die Mischvorrichtung eingebracht. Weiterhin wird über eine Eingabevorrichtung 24 Tensid in die Mischtrommel eingebracht. Als Mischtrommel kann beispielsweise ein bekannter Gegenstrommischer verwendet werden, wie er in Figur 2 dargestellt ist. Er enthält zwei gegenläufige Spiralen 22, 24 und ein Düsensystem 26, das mit den Zuführeinrichtungen 22 verbunden ist.

Es kann aber auch ein entsprechend ausgestalteter Doppelwellendruckmischer eingesetzt werden.

Bei Verwendung eines Gegenstrommischers gemäß Figur 2 wird die Trommel zum Befüllen in der Richtung gedreht, daß die Außenspiralen einziehen. Nach dem Befüllen der Trommel kann diese verschlossen werden, so daß Gase, Dämpfe und Brühen gezielt abgesondert werden können. Zum Entleeren wird die Trommelrichtung umgekehrt, die Außenspiralen fördern aus.

Hinter der ersten Waschstufe ist in Fließrichtung des Materials der zweiten Waschstufe ein Pufferbehälter 30 zwischengeschaltet, um den Übergang von der diskontinuierlichen ersten Arbeitsstufe zur kontinuierlich arbeitenden zweiten Waschstufe gewährleisten. Der Pufferbehälter besteht aus einem Trog, der mit einem Kratzkettenförderer ausgerüstet ist. Dieser Kratzkettenförderer transportiert die Feststoffe in die zweite Waschstufe.

Die zweite Waschstufe besteht im wesentlichen aus einer Waschtrommel 40, in der die Feststoffe von der flüssigen Phase getrennt werden. Die schweren Bestandteile setzen sich durch die Schwerkraft ab und werden beispielsweise durch eine Förderspirale und Schöpfbecher auf der Seite entgegen der Zulaufseite ausgetragen. Das Spülwasser durchströmt die Trommel in entgegengesetzter Richtung und trägt die feinen Bestandteile auf der Einfüllseite aus. Von hier gelangt das Wasser direkt in den zentralen Pumpensumpf, von wo aus es einer Wasseraufbereitung zugeführt wird.

Im Gegensatz zur ersten Reinigungsstufe arbeitet diese zweite Reinigungsstufe kontinuierlich, was eine regelbare Zufördermenge erfordert. Die Mengendurchsätze der ersten und zweiten Reinigungsstufe müssen somit auf- einander abgestimmt sein, wobei kleinere Schwankungen durch den Pufferbehälter ausgeglichen werden können.

Der ausgetragene Feststoff enthält einen relativ hohen Feuchtigkeitsanteil der je nach Bodenart 20 bis 50 Volumen-Prozent betragen kann. Eine weitergehende Entwässerung bzw. Abtrennung kann durch eine nachgeschaltete Entwässerungsschnecke 50 erreicht werden. Auch die Entwässungsschnecke arbeitet kontinuierlich, wobei nochmals etwas Spülwasser zugegeben wird. Die überschüssige Wassermenge gelangt gleichfalls in den Pumpensumpf und kann von dort aus in die Waschtrommel zurückgepumpt werden.

Der gereinigte und entwässerte Feststoff kann am Ende der Schnecke bzw. am Ende der Waschtrommel über ein Förderband 60 auf die Halde 62.

Schwachkontaminierte Feststoffe können einem Kurzdurchlauf unterworfen werden, wobei die erste Waschstufe in der Mischvorrichtung 20 entfällt.

Das gesamte im Verfahren bzw. in der Vorrichtung anfallende Schmutz- bzw. Waschwasser wird in einem zentralen Pumpensumpf gesammelt und von hier in einen Kläreindicker 72 gepumpt. Im Kläreindicker findet eine Sedimentation der im Schlammwasser befindlichen mineralischen Bestandteile statt. Der aus dem Kläreindicker abgezogene Schlamm kann dann noch einem Vakuumbandfilter 74 zur Nachentwässerung zugeführt und bei Temperaturen von bevorzugt etwa 250 bis 350°C getrocknet werden. Die gesamte kontaminierte Luft sowie die Brühen werden über ein Rohrleitungssystem an den jeweiligen Emissionsquellen erfaßt und einer Biofilteranlage 80 zugeführt. Die Biofilteranlage arbeitet nach bekannten mikrobiologischen Verfahren. Weiterhin ist eine Umkehrosmoseanlage 90 vorgesehen, in der das gesamte Spül-, bzw. Waschwasser insbesondere bei stärkerer Schwermetallkontamination zusätzlich gereinigt wird.

Die beschriebene Anlage bzw. das Waschverfahren eignet sich für die Reinigung von sandig-kiesigen Böden mit Schruff- und Feinkorn, gebrauchtem Streusplitt, Schotter, Sandstrahlgut, Filtermaterial und ähnlichen kontraminierten Feststoffen, Böden, Erdreich und dergleichen. Die nachfolgenden Beispiele erläutern das erfindungsgemäße Verfahren näher.

### Beispiel 1

### Reinigung von 1500 Tonnen mineralölverunreinigten Erdreichs

Bei Bauarbeiten wurden auf dem Gelände eines ehemaligen Tanklagers ca. 700 m³ mineralölversuchten Materials angetroffen.

Bei dem Material handelt es sich um einen stark sandig-schluffigen Kies, dessen Feinkornanteil < 0,06 mm bei Werten bis zu 33 % lag.

Nachstehend sind die Analyseergebnisse wiedergegeben. Die nachfolgende Tabelle zeigt die Belastung des Bodens mit Mineralölkohlenwasserstoffen, wie sie bei den durchgeführten Voruntersuchungen angetroffen wurden.

| Datum | Probenbezeichnung | KW nach DIN (mg/kg) |
|---|---|---|
| 04.03.91 | BP 1 | 4,7 |
| 27.03.91 | BP 2 | 2,953 |
| | BP 3 | 2.040 |
| 16.04.91 | BP 4 | 1.101 |
| | BP 5 | 889 |
| 17.04.91 | BP 6 | 15 |
| | BP 7 | 10 |
| | BP 8 | 6,3 |
| 08.05.91 | BP 9 | 967 |

### Ermittelte Bodenbelastungen aus den Voruntersuchungen

Nach den den Voruntersuchungen (siehe vorstehende Tabelle) wurde das Waschverfahren ausgerichtet, das Ausgangsmaterial laufend beprobt und auf den Gehalt nach Kohlenwasserstoffen (KW) untersucht.

Von dem Eingangsmaterial wurden einzelne Proben genommen. Die Kontaminationswerte schwankten stark. Am 26.07.1991 wurde z.B. eine ungewöhnlich hohe Eingangsbelastung von 18875 mg/kg gemessen, während man aufgrund der Voruntersuchungen von einem Wert von ca. 3000 mg/kg ausgegangen war.

Für die Probe vom 26.07.91 läßt sich anhand der mitgeteilten Tabellenwerte ein Reinigungsgrad von rund 99 % erzielen. Für die übrigen Ausgangsproben betrug der Reinigungsgrad ca. 96 %. Siehe hierzu die nachstehende Tabelle.

Der vom Wasserwirtschaftsamt München geforderte und mit der Berlin-Liste identische Wert von 300 mg/kg TS für den Wiedereinbau des Bodens wurde von allen untersuchten Proben eingehalten, ja im Mittel sogar sehr deutlich unterschritten.

Damit ist das Waschergebnis nach den bisherigen Erfahrungen mit der Anlage, vor dem Hintergrund der aus der Fachwelt berichteten Reinigungsergenisses und unter Berücksichtigung der Wascherschwernis durch den hohen Schluffanteil des Bodens als sehr gut einzustufen.

| Mineralölkohlenwasserstoffe nach DIN | | | | |
|---|---|---|---|---|
| Datum | Boden (mg/kg) | | Abwasser (mg/l) | Schlamm (mg/kg) |
| | Eingang | Ausgang | | |
| 24.06.91 | - | 189 | - | - |
| 01.07.91 | - | 104 | 0,4 | 131 |
| 03.07.91 | - | 49 | - | 86 |
| 04.07.93 | - | 37 | - | 276 |
| 08.07.91 | - | 129 | - | 319 |
| 08.07.91 | - | - | - | 240 |
| 09.07.91 | - | 72 | 12 | 304 |
| 10,07.91 | - | 44 | 0,1 | 44 |
| 15.07.91 | - | - | - | 225 |
| 16.07.91 | - | 155 | 0,3 | 314 |
| 26.07.91 | 18.875 | 69 | 5,9 | 201,4 |
| 29.07.91 | - | 60 | 5,5 | 149,3 |

Belastungen des Bodens sowie von Schlamm und Abwasser nach dem Auswaschen von Mineralölkohlenwasserstoffen.

### Beispiel 2

### Schwermetallbelasteter Kiesboden

Ein mit Schwermetallen belasteter Kies aus dem Fundamentbereich einer ehemaligen Galvanikfarik mit Korngrößen ausschließlich < 10 mm wurde ebenfalls mit einer Anlage der beschriebenen Konfiguration gewaschen.

Der Reinigungsgrad für die Summe der Schwermetallanteile lag dabei bei ca. 90 %, die Stufe -1 Werte des LFU - Leitfaden Bayern wurden dabei in allen Einzelkontaminationen weit unterschritten, wie die nachfolgenden Tabellen für die Untersuchungen aus der Originalsubstanz sowie aus dem Eluat zeigen.

### Untersuchungen aus der Originalsubstanz

| Parameter | | Dimension | Probe SM-0 Eingang | Stufe-1 Wert* | Stufe-2 Wert* | Probe SM-3 Ausgang |
|---|---|---|---|---|---|---|
| Trockenrückstand der Originalprobe | | % | 94,4 | -- | -- | 98,3 |
| Blei | Pb | mg/kg TR | 5,9 | 30 | 50 | <5 |
| Cadmium | Cd | mg/kg TR | <0,3 | 5 | 20 | <0,3 |
| Chrom | Cr | mg/kg TR | 18 | 250 | 800 | 0,8 |
| Kupfer | Cu | mg/kg TR | 18 | 100 | 500 | 21 |
| Nickel | Ni | mg/kg TR | 330 | 100 | 500 | 25 |
| Zink | Zn | mg/kg TR | 15 | 500 | 3000 | 3,0 |

| | | | | | | |
|---|---|---|---|---|---|---|
| * = LfU - Leitfaden für Bayern | | | | | | |

### Untersuchungen aus dem Eluat

| Parameter | | Dimension | Probe SM-3 Eluat | Stufe-1 Wert* | Stufe-2 Wert* |
|---|---|---|---|---|---|
| pH-Wert bei 20 °C | | -- | 7,9 | -- | -- |
| El.Leitfähigkeit (25 °C) | | µS/cm | 46 | -- | -- |
| Trockenrückstand der Originalprobe | | % | 98,3 | -- | -- |
| Blei | Pb | µg/l | <5 | 40 | 160 |
| Cadmium | Cd | µg/l | <0,2 | 5 | 20 |
| Chrom | Cr | µg/l | <1 | 50 | 200 |
| Kupfer | Cu | µg/l | 3 | 50 | 200 |
| Nickel | Ni | µg/l | 3 | 50 | 200 |
| Zink | Zn | µg/l | 51 | 200 | 800 |

| | | | | | |
|---|---|---|---|---|---|
| * = LfU - Leitfaden für Bayern | | | | | |

### Belastung vor (SM-0) und nach der Wäsche (SM-3)

Methodik: Elierbarkeit DIN 38414-S4 Membr.filtration 0,45 um Trockenrückstand DIN 38414-S2
Analytik: Atomabsorptions-Spektralphotometrie gem. DIN

### Beispiel 3

### PAK kontaminierter Boden aus einem Gaswerksgelände

Ein weiterer Waschversuch bezog sich auf ca. 10 m³ Boden aus einem Altlaststandort (Gaswerk), um die Reinigungsleistung der Anlage zu testen.

Bei dem Boden handelte es sich um einen sandigen Kies mit sehr hohem Schluffanteil, der außerdem noch mit hochporösen Koksresten durchsetzt war. Es wurden lediglich die Korngrößen < 10 mm untersucht.

### Untersuchungsumfang und Analytik:

Im Verlauf des Waschvorgangs kamen auch Tenside zur Anwendung. Die Bodenproben wurden auftragsgemäß auf polycyclische aromatische Kohlenwasserstoffe (EPA-Liste) untersucht.

### Bodenprobe ungereinigt:

- Bestimmung aus der Originalsubstanz, nur Korngrößenanteil < 10mm untersucht

### Bodenprobe gereinigt:

- Bestimmung aus der Originalsubstanz, nur Korngrößenanteil < 10mm untersucht
- Bestimmung aus dem Eluat

### Schlammprobe:

- Schlammprobe 24 Stunden im Imhoffglas abgesetzt, Aliquot des sedimentierten Schlammes untersucht

### Schlammwasser, filtriert und infiltriert:

- Schlammprobe 24 Stunden im Imhoffglas abgesetzt, ein Aliquot des getrübten Überstandes direkt analysiert, ein Aliquot über 0,45 µm membranfiltriert und dann zur Analyse eingesetzt.

### Untersuchungsmethodik :

| | | |
|---|---|---|
| Bestimmung der Eluierbarkeut mit Wasser | DIN 38 414-S 4 Membranfiltration 0,45 µm | |
| Polycyclische aromatische Kohlenwasserstoffe PAK nach EPA 610 | **Probenvorbereitung:** | |
| | Feststoffe: | Trocknung mit |
| | | Natriumsulfat |
| | Extraktion mit Cyclohexan, Clean-up | |
| | **Analytik:** | |
| | HPLC/Fluoreszenzdetektion | |

Die Untersuchungen sind in den beiden folgenden Tabellen wiedergegeben.

Vergleich der Belastungswert eines PAK-belasteten Bodens aus einem Altlastenstandort (Gaswerk) vor und nach der Wäsche

### Untersuchung der Originalsubstanz

Der mit polycyclischen Kohlenwasserstoffen (PAK) belastete Boden konnte in der PAK-Summe zu ca. 76 % gereinigt werden, wobei der Stufe-1 Wert nicht, der Stufe-2 Wert jedoch um 45 % unterschritten wurde.

| **Parameter** | **Dimension** | **Boden, ungereinigt** | **Boden, gereinigt** | **Schlamm, abgesetzt** |
|---|---|---|---|---|
| **PAK EPA-Liste:** | | | | |
| Naphthalin | mg/kg TR | < 0,01 | < 0,01 | < 0,01 |
| Acenaphthen | mg/kg TR | < 0,01 | < 0,01 | < 0,01 |
| Acenaphthylen | mg/kg TR | < 0,10 | < 0,10 | < 0,10 |
| Fluoren | mg/kg TR | < 0,01 | < 0,01 | < 0,01 |
| Phenanthren | mg/kg TR | 1,9 | 0,5 | 0,3 |
| Anthracen | mg/kg TR | < 0,01 | < 0,01 | < 0,01 |
| Fluoranthen | mg/kg TR | 21 | 5,6 | 4,9 |
| Pyren | mg/kg TR | 7,5 | 2,3 | 3,4 |
| Benzo(a)anthracen | mg/kg TR | 4,4 | 0,9 | 3,3 |
| Chrysen | mg/kg TR | 2,6 | 0,5 | 2,2 |
| Benzo(b)fluoranthen | mg/kg TR | 1,9 | 0,3 | 1,7 |
| Benzo(k)fluoranthen | mg/kg TR | 1,0 | 0,2 | 1,1 |
| Benzo(a)pyren | mg/kg TR | 2,3 | 0,4 | 1,7 |
| Dibenz(ah)anthracen | mg/kg TR | 0,4 | 0,04 | 0,2 |
| Benzo(ghi)perylen | mg/kg TR | 1,2 | 0,2 | 1,3 |
| Indeno(123-cd)pyren | mg/kg TR | 1,1 | 0,1 | 1,3 |
| **Summe PAK** ***)** | mg/kg TR | 45 | 11 | 21 |
| **Stufe-1-Wert** ****)** | mg/kg TR | 2 | 2 | 2 |
| **Stufe-2-Wert** ****)** | mg/kg TR | 20 | 20 | 20 |

| | | | | |
|---|---|---|---|---|
| *) Die Komponenten unter der Nachweisgrenze wurden bei der Summenbildung nicht berücksichtigt | | | | |
| **) LfU-Leitfaden, Bayern | | | | |
| n.n. = nicht nachweisbar TR = Trockenrückstand | | | | |

Vergleich der Belastungswerte eines PAK-belasteten Bodens aus einem Altlastenstandort (Gaswerk) vor und nach der Wäsche.

### Untersuchung der Wasser- und Eluatproben:

Die Belastungen im Eluat lagen für alle Substanzen unterhalb der Nachweisbarkeitsgrenze. Der Summenwert PAK 0,2 Ug/Itr wurde nicht erreicht. Der Grund dürfte in der Membranfiltration mit 0,45 Um liegen.

| **Parameter** | **Dimension** | **Schlammwasser unfiltriert** | **Schlammwasser filtriert** | **Boden, gereinigt Eluat** |
|---|---|---|---|---|
| **PAK EPA-Liste:** | | | | |
| Naphthalin | µg/l | < 0,01 | < 0,01 | < 0,01 |
| Acenaphthen | µg/l | < 0,01 | < 0,01 | < 0,01 |
| Acenaphthylen | µg/l | < 0,10 | < 0,10 | < 0,10 |
| Fluoren | µg/l | < 0,01 | < 0,01 | < 0,01 |
| Phenanthren | µg/l | 1,3 | < 0,01 | < 0,01 |
| Anthracen | µg/l | 0,1 | < 0,01 | < 0,01 |
| Fluoranthen | µg/l | 2,9 | < 0,01 | < 0,01 |
| Pyren | µg/l | 0,2 | < 0,01 | < 0,01 |
| Benzo(a)anthracen | µg/l | 1,1 | < 0,01 | < 0,01 |
| Chrysen | µg/l | 0,7 | < 0,01 | < 0,01 |
| Benzo(b)fluoranthen | µg/l | 0,3 | < 0,01 | < 0,01 |
| Benzo(k)fluoranthen | µg/l | 0,2 | < 0,01 | < 0,01 |
| Benzo(a)pyren | µg/l | 0,3 | < 0,01 | < 0,01 |
| Dibenz(ah)anthracen | µg/l | 0,5 | < 0,01 | < 0,01 |
| Benzo(ghi)perylen | µg/l | 0,1 | < 0,01 | < 0,01 |
| Indeno(123-cd)pyren | µg/l | < 0,01 | < 0,01 | < 0,01 |
| **Summe PAK** ***)** | µg/l | 7,7 | n.n. | n.n. |
| **Stufe-1-Wert** ****)** | µg/l | 0,2 | 0,2 | 0,2 |
| **Stufe-2-Wert** ****)** | µg/l | 2 | 2 | 2 |

| | | | | |
|---|---|---|---|---|
| *) Die Komponenten unter der Nachweisgrenze wurden bei der Summenbildung nicht berücksichtigt | | | | |
| **) LfU-Leitfaden, Bayern | | | | |
| n.n. = nicht nachweisbar | | | | |

### Beispiel 4

### Reinigung von Streusplitt

Nach dem Winter 1991/92 gelangten 25 t Streusplitt aus dem Stadtbereich von München zur Wäsche. Das Material mit einem Korn von ca. 0,1 - 11 mm wies Verunreinigungen durch Schwermetalle, unpolare Kohlenwasserstoffe und PAK's auf. Nach der Wäsche war die Kontamination des gereinigten Materials durch Schwermetalle auf 38 % des Ausgangswertes, die der Kohlenwasserstoffe auf 27 % und die der PAK-Summe von 0,23 mg/kg TR auf einen nicht mehr feststellbaren Wert zurückgegangen, wie aus nachstehender Tabelle zu entnehmen ist / 9 / .

### Untersuchung aus der Originalsubstanz

| Parameter | | Dimension | Streusplitt, ungereinigt | Streusplitt, gereinigt | Schlamm |
|---|---|---|---|---|---|
| Trockenrückstand der Originalprobe | | % | 93,7 | 96,1 | 49,0 |

| Schwermetalle: | | | | | |
|---|---|---|---|---|---|
| Arsen | As | mg/kg TR | 1,4 | 0,7 | 11 |
| Blei | Pb | mg/kg TR | 8,7 | < 2 | 120 |
| Cadmium | Cd | mg/kg TR | < 0,3 | < 0,3 | 1,2 |
| Chrom, gesamt | Cr | mg/kg TR | < 3 | < 3 | 37 |
| Kupfer | Cu | mg/kg TR | 5,3 | < 2 | 79 |
| Nickel | Ni | mg/kg TR | < 3 | < 3 | 14 |
| Quecksilber | Hg | mg/kg TR | < 0,1 | < 0,1 | < 0,1 |
| Zink | Zn | mg/kg TR | 31 | 9,3 | 250 |
| Kohlenwasserstoffe, unpolar | | mg/kg TR | 160 | 44 | 2500 |

| PAK nach EPA 610: | | | | | |
|---|---|---|---|---|---|
| Naphthalin | | mg/kg TR | < 0,01 | < 0,01 | < 0,01 |
| Acenaphthen | | mg/kg TR | < 0,01 | < 0,01 | < 0,01 |
| Acenaphthylen | | mg/kg TR | < 0,10 | < 0,10 | < 0,10 |
| Fluoren | | mg/kg TR | < 0,01 | < 0,01 | < 0,01 |
| Phenanthren | | mg/kg TR | < 0,01 | < 0,01 | < 0,01 |
| Anthracen | | mg/kg TR | < 0,01 | < 0,01 | 0,03 |
| Fluoranthen | | mg/kg TR | < 0,01 | < 0,01 | 1,0 |
| Pyren | | mg/kg TR | < 0,01 | < 0,01 | 0,7 |
| Benzo(a)anthracen | | mg/kg TR | < 0,01 | < 0,01 | 0,1 |
| Chrysen | | mg/kg TR | 0,03 | < 0,01 | 0,4 |
| Benzo(b)fluoranthen | | mg/kg TR | 0,04 | < 0,01 | 0,3 |
| Benzo(k)fluoranthen | | mg/kg TR | 0,02 | < 0,01 | 0,1 |
| Benzo(a)pyren | | mg/kg TR | 0,05 | < 0,01 | 0,7 |
| Dibenz(ah)anthracen | | mg/kg TR | 0,01 | < 0,01 | 0,01 |
| Benzo(ghi)perylen | | mg/kg TR | 0,04 | < 0,01 | 0,2 |
| Indeno(123-cd)pyren | | mg/kg TR | 0,04 | < 0,01 | 0,2 |
| Summe PAK *) | | mg/kg TR | 0,23 | n.n. | 3,7 |

| | | | | | |
|---|---|---|---|---|---|
| *) Die Komponenten unter der Nachweisgrenze wurden bei der Summenbildung nicht berücksichtigt | | | | | |
| n.n. = nicht nachweisbar | | | | | |

Die Untersuchungsergebnisse der Streusplittreinigung aus den gewonnenen Eluaten zeigen bei den PAK Werte unterhalb der Nachweisgrenze. Alle Meßwerte bei den Schwermetallen erfüllten die Anforderungen an Streustoffe für den Winterdienst.

Der Streusplitt war nach der Wäsche staubfrei und wiederverwendungsfähig. Dabei ist zu bedenken, daß es nach bisheriger Praxis als Sondermüll hätte entsorgt werden müssen. Untersuchung aus den Eluaten

| Parameter | | Dimension | Streusplitt, ungereinigt | Streusplitt, gereinigt |
|---|---|---|---|---|
| Trockenrückstand der Originalprobe | | % | 93,7 | 96,1 |
| pH-Wert bei 20 °C | | --- | 8,7 | 9,9 |
| El.Leitfähigkeit (25°C) | | µS/cm | 110 | 25 |

| Schwermetalle: | | | | |
|---|---|---|---|---|
| Arsen | As | mg/l | < 0,0005 | < 0,0005 |
| Blei | Pb | mg/l | < 0,005 | < 0,005 |
| Cadmium | Cd | mg/l | < 0,0002 | < 0,0002 |
| Chrom, gesamt | Cr | mg/l | 0,001 | < 0,001 |
| Kupfer | Cu | mg/l | 0,011 | 0,005 |
| Nickel | Ni | mg/l | < 0,001 | < 0,001 |
| Quecksilber | Hg | mg/l | < 0,0005 | < 0,0005 |
| Zink | Zn | mg/l | < 0,01 | < 0,01 |
| Kohlenwasserstoffe, unpolar | | mg/l | < 0,3 | < 0,3 |

| PAK nach EPA 610: | | | | |
|---|---|---|---|---|
| Naphthalin | | µg/l | < 0,01 | < 0,01 |
| Acenaphthen | | µg/l | < 0,01 | < 0,01 |
| Acenaphthylen | | µg/l | < 0,10 | < 0,10 |
| Fluoren | | µg/l | < 0,01 | < 0,01 |
| Phenanthren | | µg/l | < 0,01 | < 0,01 |
| Anthracen | | µg/l | < 0,01 | < 0,01 |
| Fluoranthen | | µg/l | < 0,01 | < 0,01 |
| Pyren | | µg/l | < 0,01 | < 0,01 |
| Benzo(a)anthracen | | µg/l | < 0,01 | < 0,01 |
| Chrysen | | µg/l | < 0,01 | < 0,01 |
| Benzo(b)fluoranthen | | µg/l | < 0,01 | < 0,01 |
| Benzo(k)fluoranthen | | µg/l | < 0,01 | < 0,01 |
| Benzo(a)pyren | | µg/l | < 0,01 | < 0,01 |
| Dibenz(ah)anthracen | | µg/l | < 0,01 | < 0,01 |
| Benzo(ghi)perylen | | µg/l | < 0,01 | < 0,01 |
| Indeno(123-cd)pyren | | µg/l | < 0,01 | < 0,01 |
| Summe PAK *) | | µg/l | n.n. | n.n. |

| | | | | |
|---|---|---|---|---|
| *) Die Komponenten unter der Nachweisgrenze wurden bei der Summenbildung nicht berücksichtigt | | | | |
| n.n. = nicht nachweisbar | | | | |

Das Waschverfahren ist geeignet, eine Vielzahl der bekannten Kontaminationen aus dem Boden zu entfernen. Es produziert bei gewissenhafter Planung keine zusätzlichen Stoffe, welche die Umwelt über die energiespezifischen Emissionen des Verfahrens hinaus schädigen.

Die ausgewaschenen Schadstoffe werden entweder auf ein möglichst geringes Entsorgungsvolumen reduziert oder erforderlichenfalls nach einer thermischen Behandlung zurückgewonnen.

Die Anlage erfüllt somit wesentliche Aspekte für eine erfolgreiche und schonende Reinigung kontaminierter Boden- und Baumaterialien.

Als Alternative zur Bodenwäsche würde sich nur die thermische Behandlung der gesamten Bodenmasse mit entsprechendem Energieeinsatz und hoher CO2-Emission erfolgen. In einer Zeit, in der sich die westliche Welt intensiv bemüht, den CO2-Ausstoß in allen Verbrauchsbereichen einzudämmen, wäre das Ausweichen von der Bodenwäsche auf die Verbrennung wegen der Unverhältnismäßigkeit von Analyseforderungen umweltpolitisch nicht zu vertreten. Als Ausgleich des CO2-Haushalts ist in diesem Zusammenhang auch die Verwendung von pflanzlichem Treibstoff zu bewerten.

## Patentansprüche

1. Verfahren zum Dekontaminieren fester Stoffe, insbesondere Erdreich, durch mehrstufiges Waschen vorgesiebter Teilchen, wobei mit Warmwasser, Sattdampf und Tensiden in einer ersten Reinigungsstufte gewaschen wird, und
in einer zweiten Reinigungsstufe kontinuierlich unter Zugabe von zusätzlichem Wasser gewaschen wird, und
der anfallende Schlamm getrocknet wird,
**dadurch gekennzeichnet**, daß
in der ersten Reinigungsstufe nach den einzelnen Fraktionen getrennt die vorgesiebten Teilchen in einem Mischer diskontinuierlich behandelt werden und anschließend in einen Pufferbehälter überführt werden,
und in der zweiten Reinigungsstufe die Feststoffe abgeschieden werden,
nach Bedarf in einer Schnecke nachgewaschen wird, und
der aus den wäßrigen Phasen der vorhergehenden Stufen abgeschiedene Schlamm mechanisch entwässert und einer thermischen Trocknung unterzogen wird.

2. Verfahren nach Anspruch 1, dadurch gekennzeichnet, daß die Teilchen auf Korngrößen von 0 - 2 cm, 2 bis 10 cm und mehr als 10 cm vorgesiebt werden.

3. Verfahren nach Anspruch 1, **dadurch gekennzeichnet,** daß in der ersten Reinigungsstufe Warmwasser mit einer Temperatur von 40° bis 80° C eingesetzt wird.

4. Verfahren nach Anspruch 1 und 3, **dadurch gekennzeichnet,** daß Warmwasser mit einer Temperatur von 50-60° eingesetzt wird.

5. Verfahren nach Anspruch 1, **dadurch gekennzeichnet,** daß in der ersten Reinigungsstufe Sattdampf mit einer Temperatur von 150° bis 250° eingesetzt wird.

6. Verfahren nach Anspruch 1 und 5, **dadurch gekennzeichnet,** daß Sattdampf mit einer Temperatur von 180 bis 220° C eingesetzt wird.

7. Verfahren nach Anspruch 1, **dadurch gekennzeichnet,** daß in der zweiten Reinigungsstufe Warmwasser mit einer Temperatur von 40° bis 80° C zugegeben wird.

8. Verfahren nach Anspruch 1 und 7, **dadurch gekennzeichnet,** daß Warmwasser mit einer Temperatur von 50° bis 60° C zugegeben wird.

9. Verfahren nach Anspruch 1, **dadurch gekennzeichnet,** daß in der zweiten Reinigungsstufe Wasser in einer Menge des 0,5 bis 3-fachen des zu dekontaminierenden Feststoffs, bezogen auf dessen Trockensubstanz, zugegeben wird.

10. Verfahren nach Anspruch 1 und 9, **dadurch gekennzeichnet,** daß die zugegebene Wassermenge das 1- bis 2-fache des zu dekontaminierenden Feststoffs beträgt.

11. Verfahren nach Anspruch 1, **dadurch gekennzeichnet,** daß die thermische Trocknung des Schlammes bei Temperaturen von 200 bis 400 ° C durchgeführt wird.

12. Verfahren nach Anspruch 1, **dadurch gekennzeichnet,** daß die Abluft aus der Schlammtrocknung über ein Biofilter geleitet wird.

13. Verfahren nach Anspruch 1, **dadurch gekennzeichnet,** daß das Abwasser sämtlicher Verfahrensstufen durch Umkehrosmose gereinigt wird.

14. Vorrichtung zum Dekontaminieren fester Stoffe, insbesondere Erdreich, enthaltend
eine Beschickungsvorrichtung (10), und
eine Mischvorrichtung (20) mit Zuführvorrichtungen (22) für vorgesiebte Teilchen, Wasser und Sattdampf,
gekennzeichnet durch
einen diskontinuierlich arbeitenden Gegenstrom-Mischer mit zwei gegenläufigen Spiralen (22, 24) und einem Düsensystem (26) oder einen Doppelwellen-Trogmischer zur Einführung von Wasser, Dampf und Zusatzmitteln als Mischvorrichtung (20);
einen Pufferbehälter (30) mit Fördereinrichtung (32); und eine Waschtrommel (40);
wobei die einzelnen Aggregate in der genannten Reihenfolge in Materialfließrichtung hintereinander geschaltet sind.

15. Vorrichtung nach Anspruch 14, **dadurch gekennzeichnet,** daß sie eine der Waschtrommel (40) nachgeschaltete Entwässerungsschnecke (50) enthält.

16. Vorrichtung nach Anspruch 14, **dadurch gekennzeichnet,** daß als Pufferbehälter (30) ein Trog dient, der mit einem Kratzkettenförderer ausgerüstet ist.

17. Vorrichtung nach Anspruch 14, **dadurch gekennzeichnet,** daß als Waschtrommel (40) eine Gegenstromwaschtrommel dient.

## Claims

1. A method of decontaminating solid substances, in particular earth, by multi-stage washing of pre-sieved particles, wherein washing is effected with hot water, saturated steam and surface active agents in a first purification stage, and
washing is effected continuously with the addition of additional water in a second purification stage, and
the slurry produced is dried
characterised in that
in the first purification stage, separated in accordance with the individual fractions, the pre-sieved particles are discontinuously treated in a mixer and are then transferred into a buffer container, and
in the second purification stage the solid substances are separated off,
if required a post-washing operation is effected in a screw, and
the slurry which is separated out of the aqueous phases of the preceding stages is mechanically dewatered and subjected to a thermal drying operation.

2. A method according to claim 1 characterised in that the particles are pre-sieved to grain sizes of 0 - 2 cm, 2 to 10 cm and more than 10 cm.

3. A method according to claim 1 characterised in that hot water at a temperature of 40° to 80°C is used in the first purification stage.

4. A method according to claims 1 and 3 characterised in that hot water at a temperature of 50 - 60° is used.

5. A method according to claim 1 characterised in that saturated steam at a temperature of 150° to 250° is used in the first purification stage.

6. A method according to claims 1 and 5 characterised in that saturated steam at a temperature of 180 to 220°C is used.

7. A method according to claim 1 characterised in that hot water at a temperature of 40° to 80°C is added in the second purification stage.

8. A method according to claims 1 and 7 characterised in that hot water at a temperature of 50° to 60°C is added.

9. A method according to claim 1 characterised in that water in an amount of 0.5 to 3 times the solid substance to be decontaminated, with respect to the dry substance thereof, is added in the second purification stage.

10. A method according to claims 1 and 9 characterised in that the amount of water added is 1 to 2 times the solid substance to be decontaminated.

11. A method according to claim 1 characterised in that the thermal drying operation for the slurry is effected at temperatures of 200 to 400°C.

12. A method according to claim 1 characterised in that the exhaust air from the slurry drying operation is passed over a biofilter.

13. A method according to claim 1 characterised in that the waste water from all method stages is purified by reverse osmosis.

14. Apparatus for decontaminating solid substances, in particular earth, including:
a loading device (10), and
a mixing device (20) with feed devices (20) for pre-sieved particles, water and saturated steam, characterised by:
a discontinuously operating counter-flow mixer with two oppositely extending spirals (22, 24) and a nozzle system (26) or a double-shaft trough mixer for the introduction of water, steam and additives as the mixing device (20);
a buffer container (30) with conveyor device (32); and
a washing drum (40);
wherein the individual units are connected in succession in the specified sequence in the material flow direction.

15. Apparatus according to claim 14 characterised in that it includes a dewatering screw (50) connected downstream of the washing drum (40).

16. Apparatus according to claim 14 characterised in that a trough which is provided with a scraper chain conveyor serves as the buffer container (30).

17. Apparatus according to claim 14 characterised in that a counter-flow washing drum serves as the washing drum (40).

## Revendications

1. Procédé pour décontaminer des matières solides, en particulier un sol, par plusieurs étapes de lavage de particules ayant subi un tamisage préalable, auquel cas :
- dans une première étape de purification, on lave à l'eau chaude, avec de la vapeur saturée et des tensioactifs, et
- dans une deuxième étape de purification, on lave en continu par addition d'une quantité supplémentaire d'eau, les boues obtenues étant séchées,
**CARACTERISE** en ce que :
- dans la première étape de purification, les particules ayant subi un tamisage préalable, séparées selon les différentes fractions, sont traitées d'une manière discontinue dans un mélangeur, puis sont envoyées dans un réservoir tampon, et
- dans la deuxième étape de purification, les matières solides sont séparées, si nécessaire encore lavées dans un laveur à vis sans fin, puis les boues séparées des phases aqueuses des étapes précédentes sont soumises à une déshydratation mécanique et à un séchage thermique.

2. Procédé selon la revendication 1, **caractérisé** en ce que les particules sont soumises à un tamisage préalable à des granulométries de 0 à 2 cm, 2 à 10 cm et plus de 10 cm.

3. Procédé selon la revendication 1, **caractérisé** en ce que, dans la première étape de purification, on utilise de l'eau chaude à une température de 40 à 80°C.

4. Procédé selon les revendications 1 et 3, **caractérisé** en ce qu'on utilise de l'eau chaude à une température de 50 à 60°C.

5. Procédé selon la revendication 1, **caractérisé** en ce que, dans la première étape de purification, on utilise une vapeur saturée à une température de 150 à 250°C.

6. Procédé selon les revendications 1 et 5, **caractérisé** en ce qu'on utilise une vapeur saturée à une température de 180 à 220°C.

7. Procédé selon la revendication 1, **caractérisé** en ce que, dans la deuxième étape de purification, on ajoute de l'eau chaude à une température de 40 à 80°C.

8. Procédé selon les revendications 1 et 7, **caractérisé** en ce qu'on ajoute de l'eau chaude à une température de 50 à 60°C.

9. Procédé selon la revendication 1, **caractérisé** en ce que, dans la deuxième étape de purification, on ajoute de l'eau en une quantité de 0,5 à 3 fois la quantité du solide à décontaminer, par rapport à son extrait sec.

10. Procédé selon les revendications 1 et 9, **caractérisé** en ce que la quantité d'eau ajoutée est une à deux fois égale à la quantité des matières solides à décontaminer.

11. Procédé selon la revendication 1, **caractérisé** en ce que le séchage thermique des boues s'effectue à des températures de 200 à 400°C.

12. Procédé selon la revendication 1, **caractérisé** en ce que l'effluent gazeux du séchage des boues est envoyé sur un biofiltre.

13. Procédé selon la revendication 1, **caractérisé** en ce que les eaux résiduaires de l'ensemble des étapes du procédé sont purifiées par osmose inverse.

14. Equipement pour décontaminer des matières solides, en particulier un sol, contenant :
- un dispositif d'enfournement (10), et
- un dispositif mélangeur (20), avec des équipements d'amenée (22) pour les particules ayant subi un tamisage préalable, l'eau et la vapeur saturée,
**caractérisé** en ce qu'il comporte :
- un mélangeur à contre-courant, travaillant en discontinu, avec deux spirales opposées (22, 24) et un système de buses (26) et un mélangeur à bac à double arbre pour introduire l'eau, la vapeur et les additifs, servant de dispositif mélangeur (20) ;
- un réservoir tampon (30) avec dispositif de transport (32), et
- un tambour laveur (40) ;
les différents équipements étant montés les uns derrière les autres dans l'ordre mentionné ci-dessus dans le sens d'écoulement des matières.

15. Equipement selon la revendication 14, **caractérisé** en ce qu'il contient une vis de déshydratation (50) montée en aval du tambour laveur (40).

16. Equipement selon la revendication 14, **caractérisé** en ce qu'on utilise comme réservoir tampon (30) un bac qui est équipé d'un transporteur à racloirs.

17. Equipement selon la revendication 14, **caractérisé** en ce que le tambour laveur (40) est un tambour de lavage à contre-courant.
